# EUROPEAN PATENT APPLICATION

(11) **EP 1 008 497 A1**
(43) Date of publication of application: **14.06.2000**
(21) Application number: 98935264.6
(22) Date of filing: 29.07.1998
(51) Int. Cl.: B60R 22/26

(54) **GAS GENERATOR AND ITS FILTER**

(30) Priority: 30.07.1997 JP 20401197
(71) Applicant: Nippon Kayaku Kabushiki Kaisha, Tokyo 102-8172 (JP); KABUSHIKI KAISHA KOBE SEIKO SHO, Kobe-Shi, Hyogo-ken 651-0072 (JP)
(72) Inventor: NAGAHASHI, Ken-ichi, Tsuchiura-shi, Ibaraki 300-0027 (JP); TAGUCHI, Seigo, Himeji Factory of Nippon Kayaku KK, Himeji-shi, Hyogo 679-2123 (JP); KIKUCHI, Masaru, Niihari-gun, Ibaraki 315-0101 (JP)
(74) Representative: Pellmann, Hans-Bernd, Dipl.-Ing.
(86) International application number: JP9803374
(87) International publication number: WO9906248

(57) **Abstract**

To provide a low-priced filter for a gas generator simple in structure and capable of being produced with ease, and a low-priced gas generator using this filter, the present invention provides the filter which is formed by an expanded metal (2) having a large number of apertures (1b) being laminated cylindrically in layers, and a low-cost gas generator employing this filter.

## Description

### Technical Field

The present invention relates to a gas generator for inflating an airbag and a filter used therefor. Particularly, the present invention provides a filter of low price and simple structure for facilitation of production and a low-priced gas generator using it.

### Background Art

A filter used in a gas generator for an airbag system serves to cool a high temperature and high pressure gas generated by the burning of gas generating agents in a gas generator to thereby produce gas of a desired temperature for inflating the airbag and also scavenge slag of high temperature having metallic oxide contained in the gas as the main ingredient to thereby produce clean gas. Accordingly, the filter is required to have heat-resisting properties and strength to resist high temperature and high pressure and proper heat capacity to cool the gas, in addition to its primary function to scavenge the slag.

In general, woven metal screens, woven wires or metallic fibers are used as material having heat-resisting property and proper heat capacity to produce filters and the materials are laminated cylindrically in layers or molded by compression molding, to form cylindrical filters. When these materials are used singly to form filters, the filters formed have a problem in compressive strength. Because of this, the filters are in general improved in strength by arranging cylindrical members, which are formed of punching metal or metal screen of thick metal wire rods, as reinforcing members around the inside and outside of the cylindrical body or by sintering them integrally. These filters are basically constructed, with expectations of consolidation aggregation of entangled fine metallic wires forming woven metal screens, woven wires or metallic fibers for the function to filtrate the slag; of the cylindrical member formed of punching metal or metal screen of thick metal wire rods for the reinforcing function to improve pressure resistance; and of both of them for the cooling function.

However, in this conventional type of filters, since the consolidation aggregation of fine metallic wires used as the slag filtering function member is basically the aggregation of fine metallic wires of small in heat capacity per unit length and also since the heat transfer between the fine wires is the contact heat transfer, the degree of consolidation is low and, besides, if high temperature gas drifts locally, the fine wires will be molten instantly, which can lead to perforation of the filter in extreme cases. For this reason, adjustment of the degree of consolidation is a significantly essential factor for this type of filters. The filter for a gas generator of an elongate cylinder requires to have a corresponding length. However, when the wire is compressed for consolidation, unevenness in density develops in the compressing direction unavoidably, for the reason of which it was disadvantageously hard to produce the elongate filter. On the other hand, in order to prevent melting damage and provide an increased strength, some takes the form of a sintered filter, which however needs a sintering furnace, so that there was presented a disadvantage for manufacturing the sintered filter in quantity and at low cost.

Further, since only the use of the consolidated body of wires cannot withstand high pressure at the time of gas generation, the cylindrical member used as a reinforcing member of pressure-resistance must be arranged around the inside and outside of the consolidated cylindrical body. This makes the structure of the filter complicated and also has the limits in reducing manufacturing costs.

In the light of the disadvantages involved in the conventional type of filters, the present invention has been made. It is the object of the invention to provide a filter of low price and simple structure for facilitation of production and a generator using it. Specifically, the present invention aims to provide a low price filter of simple structure for facilitation of production of an elongate filter, in particular, and high strength, by affording the filtering function to a metallic member having heat resistance, pressure tightness and large heat capacity.

### Disclosure of the Invention

In order to solve the disadvantages, according to the present invention, an expanded metal is used as a row material of a filter and the expanded metal is laminated cylindrically in layers. This enables the filter having all required functions of the filter for the gas generator to be easily produced with simple structure. The expanded metal may be designed to have coarse apertures in its outer layer and fine apertures in its inner layer so that the filter of resistant to slag clogging can be easily produced. Further, at least one additional layer of the expanded metal or woven steel screen having apertures coarser in opening than apertures of the expanded metal formed into a filter body may be interposed between intermediate layers of the cylindrical body of the expanded metal laminated in layers, whereby a gas dome in which the gas passing through the filter is equalized is produced. As a result of this, a uniform dispersion of the gas is promoted in the filter and also the slag clogging can be easily prevented.

In addition, since the filter is formed by simply laminating the expanded metal to form the cylindrical body, an elongate filter can easily be produced by simply laminating a wide expanded metal and, further, the filter of any desired length can also be produced by cutting the cylindrical body.

### Brief Description of the Drawings

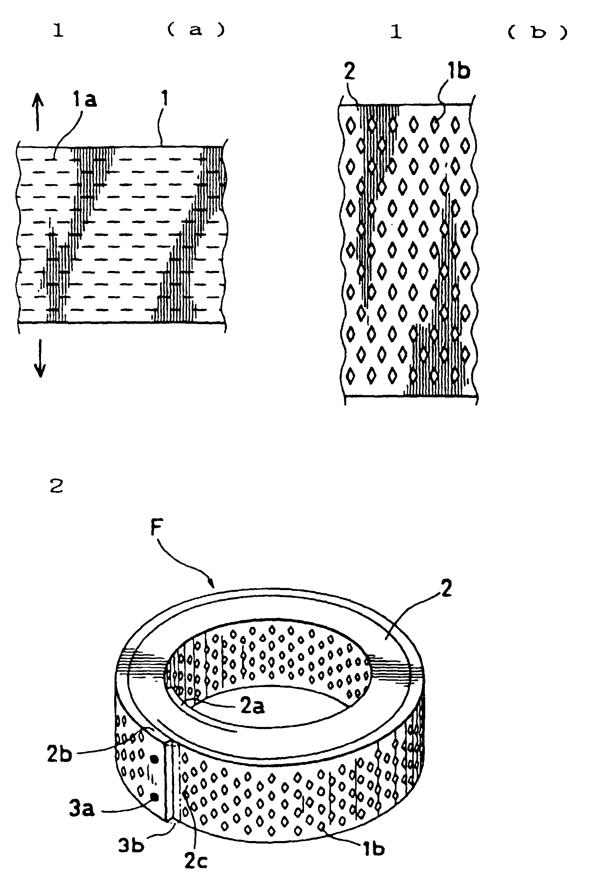

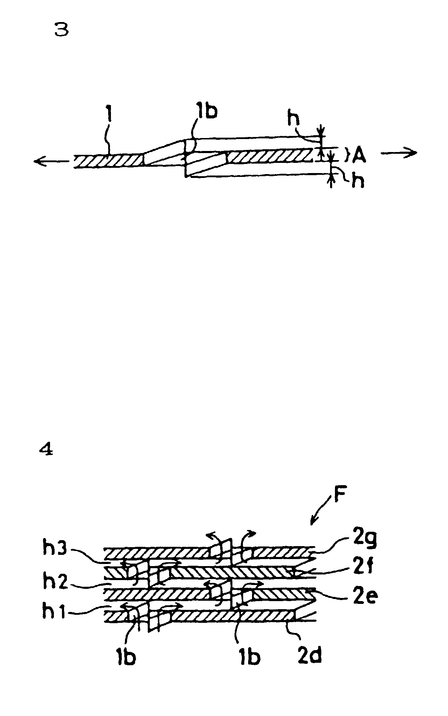

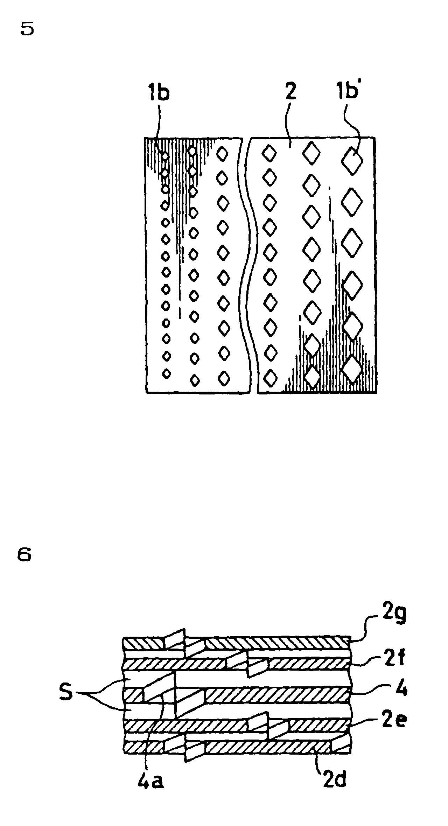

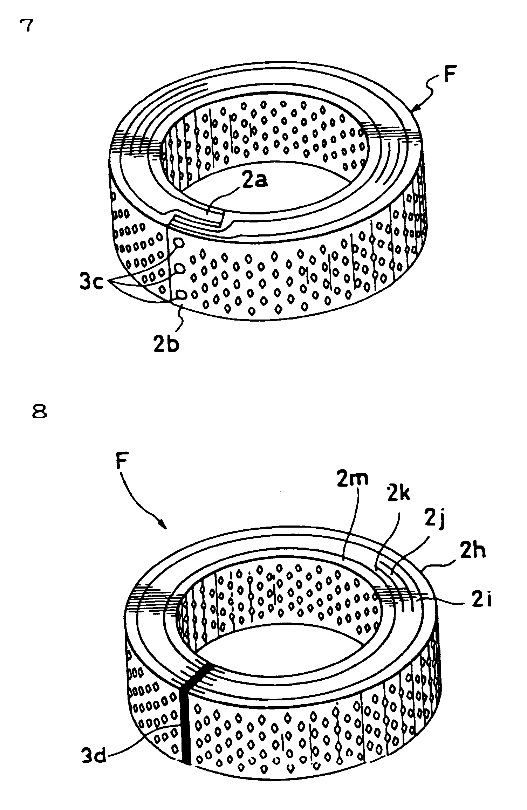

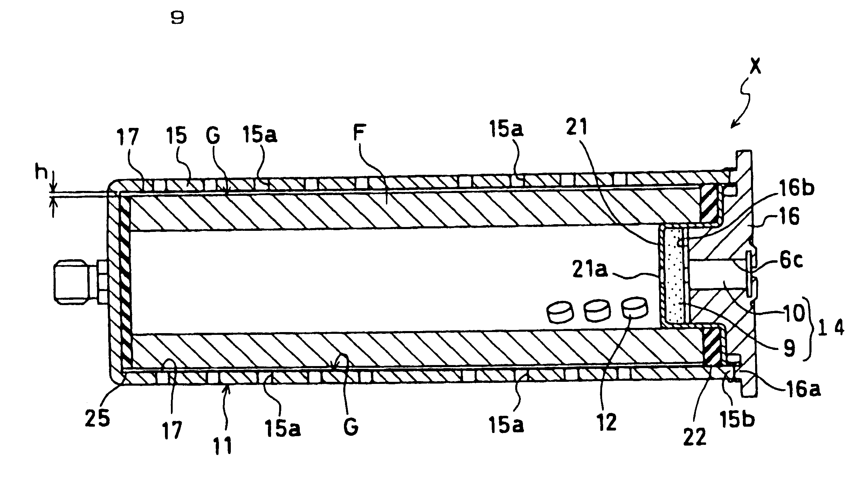

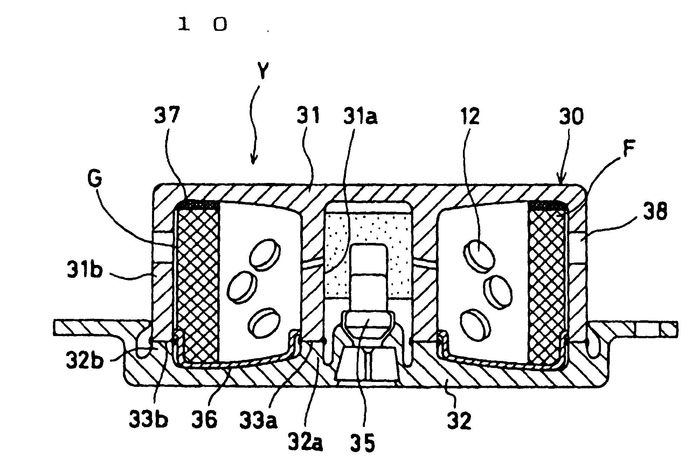

FIG. 1(a) and FIG. 1(b) are plan views showing an expanded metal used in the present invention. FIG. 1(a) shows a base material and FIG. 1(b) shows the expanded metal subjected to the tensile process in which apertures are formed. FIG. 2 is a perspective view showing one example of the filter of the present invention. FIG. 3 is an enlarged sectional view of an aperture in the expanded metal used in the present invention. FIG. 4 is a conceptual view in section of the filter of the present invention. FIG. 5 is a plan view showing another example of the expanded metal used in the present invention. FIG. 6 is a conceptual view in section of another example of the filter of the present invention. FIG. 7 is a perspective view of the another example of the filter of the present invention. FIG. 8 is a perspective view showing another example of the filter of the present invention. FIG. 9 is a sectional view of a principal part of one example of a gas generator using the filter of the present invention. FIG. 10 is a sectional view of a principal part of another example of a gas generator using the filter of the present invention.

### Best Mode For Carrying out the Invention

The embodiments of the present invention will be described below with reference to the drawings. First, referring to FIG. (a) and FIG, 1(b), there are shown an expanded metal (perforated plate) used in the present invention. The expanded metal 2 is formed by expanding a base material 1 of a sheet steel of stainless steel or common steel, in which a large number of slits 1a are formed at given intervals, in the directions of arrows so that the slits 1a are uniformly opened to form apertures 1b, as shown in FIG. 1(b).

Referring not to FIG. 2, there is shown a basic form of the filter structure of the present invention. The expanded metal 2 is laminated spirally in layers and the beginning 2a and the terminal end 2b are put in the overlaid state and fixed by spot welding 3a, to form the filter F. The terminal end 2b may be fixed to the inner layer 2c by welding 3b, rather than by the spot welding.

When stretched in the arrowed directions, the expanded metal 2 is deformed at the apertures 1b so that opposed parts of the slits are turned backward to the opposite sides of the base material. Thus, the expanded metal at the apertures is in the form of being turned backward to the opposite sides from a reference plane A of the base material 1 by a height h, as shown in FIG. 3 conceptually showing a sectional view of the aperture. Thus, when the expanded metal 2 is laminated, the layers are spaced at intervals h, so that the inside of the filter and the outside of the filter communicate with each other through the apertures 1b formed in the base material 1 and the intervals h between the layers. It is to be noted that in the work of laminating the expanded metal 2, the expanded metal 2 is successively wound around a cylindrical body while it is pressed against the cylindrical body, with the result that the actual intervals between the layers are made slightly smaller than the h.

In the filter F thus structured, a high temperature and high pressure gas generated in the inside of the filter F passes through the apertures 1b of the first inside layer of the expanded metal 2d and spurts out into the first space h1 between the first layer 2d and the second layer 2e, as schematically illustrated in FIG. 4. At this time, the gas flow collides with an inside metallic surface of the expanded metal 2, so that a part of the slag components contained in the gas adhere to the inside metallic surface of the second layer 2e and are scavenged. Similarly, the gas flowing into the first space h1 passes through the apertures of the second layer 2e and spurts out into the second space h2. In this space also, the gas spurting out collides with the inside metallic surface of the third layer 2f, so that a part of the slag components contained in the gas adhere to the inside metallic surface of the third layer and are scavenged. As the result of this phenomenon occurring repeatedly between a large number of apertures 1b and the metallic surfaces of the respective layers, the gas spurting out from the outermost layer 2g of the filter becomes clean gas containing a very little slag. Also, the high temperature gas generated in the inside of the filter flows through the filter, during which the heat is taken by the expanded metal having a large heat capacity, so that the gas is cooled down to a desired temperature before it is flown out of the filter F and is fed into the air bag.

As mentioned above, in the filter of the present invention, the scavenging of the slag is done by the so-called "Inertia scavenging method" in which the high temperature gas spurting out of the apertures 1b of the inner layer of expanded metal 2 collides with the metallic surface of the next layer, through the collision of which the slag contained in the gas is made to adhere to the metallic surface. The slag scavenging mechanism of the invention is basically different from the conventional so-called "Filter scavenging method" in which woven metal screens or metallic fibers are consolidated to form narrow gas passages, whereby the slag contained is scavenged. Thus, even when the apertures 1b of the expanded metal 2 themselves are substantially large, in comparison with the particles of the slag contained, no problem is presented.

Referring now to FIG. 5, there is shown another example of the expanded metal used in the present invention. The aperture size is the smallest at 1b at the left side of illustration, which successively increases from the left side toward the right side, and is the largest at 1b' at the right side of illustration. The expanded metal 2 is laminated spirally in such a manner that the smaller apertures 1b are located in the inside layer, to form the filter. In the filter thus constructed, since the apertures increase in size as the layers run toward the outside, even if the particles of the slag, which are formed by the step that high temperature gas collides with the metallic surface to be cooled down so that the slag contained in the gas is made to adhere to the metallic surface, as mentioned above, are brown off by the next gas stream, the effect of preventing the apertures from being clogged by the particles of slag can be expected. The apertures may be successively increased in size from inside, or may alternatively be divided into two or three groups in stages and increased in size as they run toward the outer layer.

Referring now to FIG. 6, there is shown a concept diagram showing another embodiment of the filter of the present invention, in which the first and second layers 2d, 2e at the inside and the third and fourth layers 2f, 2g at the outside are formed by the expanded metal 2 of the filter body and an additional expanded metal 4 having larger apertures is interposed between the inner layers and the outer layers. In this expanded metal 4 having larger apertures, the aperture portions are turned backward to a larger extent and thus larger spaces S are formed at the inside and outside of the expanded metal 4 having large apertures than the remaining parts. As a result of this, the equalization of pressure of the flowing gas is facilitated in the spaces S, so that a uniform gas stream is easily produced in the filter and also change in a velocity of flow of gas, or slowness and fastness, develops, as compared with the embodiment of FIG. 4. As a result of this, in the spaces S, the velocity of flow of gas is reduced and adhesion of the entrained slag is facilitated to improve the slag scavenging efficiency. In place of the expanded metal 4 with larger apertures, a woven metal screen with similar larger apertures can produce substantially the same effects.

In the illustrated embodiments discussed above, a sheet of expanded metal is laminated spirally and is fixed at the end by welding, to form the cylindrical filter. When the expanded metal remains in the state of being laminated spirally, stepped portions are produced at the beginning and the end of the expanded metal. For avoidance of this, the sheet of expanded metal may be laminated spirally in such a manner that the beginning 2a of the sheet and the terminal end 2b of the same are overlapped with each other and pressurized for compression, followed by electric resistance welding 3c to crush the spaces existing between the layers of the expanded metal at the beginning and the end 2a, 2b, so as to flatten the inside and outside surfaces, as shown in FIG. 7. Another method may be adopted in which the expanded metal is laminated concentrically while it is welded every time the layer is formed. Further, a still another method may be adopted in which the plate-like expanded metals 2h, 2i, 2j, 2k and 2m are laminated and, thereafter, are formed into the cylindrical form, followed by butt welding 3d at the end faces thereof, as shown in FIG. 8. Any one of the methods can form the filters maintaining the characteristics of the expanded metal, so no substantial difference is presented in the slag scavenging effect.

Upon manufacturing the filter F, a sheet of wide expanded metal is formed into a laminate of a cylindrical form by any one of the methods and thereby an elongate cylindrical filter can be produced easily. The end faces of the elongate filter itself are finished by machining or are finished by machining after the elongate filter is cut to a required length and thereby the filter having a required length can be produced easily. Thus, only one forming process is required without requiring a number of processes as in the prior art and also the filter having a desired length can be produced easily by the subsequent cutting working only. Further, since the expanded metal itself is formed of a metal sheet having a certain degree of thickness, the finish can be carried out by machining the end faces. This can provide improved adhesion between the end face of the filter and the housing of the generator, and as such can provide the expectation of the effect of easily preventing leakage of gas from the end faces.

Next, an example of a gas generator using the filter F of the invention will be described. FIG. 9 shows a sectional view of an elongate gas generator X mainly for a passenger use of the present invention using the filter mentioned above. The gas generator X has the housing 11 of an elongate cylinder in which pellets of gas generating agents 12 are loaded, and around the outside of which the filter F is arranged. An ignition device 14 is disposed at one end portion of the housing 11. The housing 11 is composed of an elongate outer cylinder 15 having a shape like a closed-end cylinder opening at one end thereof and a lid 16 covering the opening end. A ring-like rib 16a formed around a marginal portion of the lid 16 and the opening end of the outer cylinder 15 are butted with and fixed to each other by friction welding, to form a closed space. A single filter F is disposed in the interior of the housing 11 to extend along the lengthwise direction. According to the general filter structure, in the case where the gas generator is so long that it is difficult to form the filter by a single-piece construction due to its own length, two or more separate filters are required to be set in place. In contrast, according to the present invention, the filter can be produced as a single-piece form, as mentioned above, to contribute to cost reduction and improvement in structural strength of the filter.

The filter F is closed at one end thereof by a cushion material 25 and at the other end thereof by a cushion material 22 from the lid 16 side. The molded member such as silicone foamed material and ceramic fibers are suitable for the cushion material 22, 25. It should be noted that the cushion materials 22, 25 are not necessarily necessary in terms of the efflux of the gas. The cushion materials 22, 25 may be omitted by finishing the end faces of the filter F by machining, as aforementioned, but the arrangement of the cushion materials 22, 25 can be said to be of preferable in terms of absorption of variations in size and prevention of powdering of gas generating agents 12 by vibration during the friction welding of the housing 11.

A plurality of gas releasing holes 15a communicating to the airbag (not shown) are formed around the outside of the outer cylinder 15. The plurality of gas releasing holes 15a are placed in alignment in the axial direction of the housing 11 to form the arrays of gas holes. The arrays of gas holes are each spaced at an angle of 180 degrees in the circumferential direction. 17 designates a strip of burst plate of a sheet-metal form which is adhesive bonded to the inside surface of the outer cylinder 15. The burst plate serves to adjust the pressure during the burning of the gas generating agents 12 and also prevent the moisture and dust from entering the gas generator from outside.

The filter F used in the present invention is a laminate of the expanded metal, as aforementioned. The expanded metal has at the apertures 1b turning backward portions with the height h, as shown in FIG. 3, so that the space G corresponding to the height h of the turning backward portion is formed between the outside surface of the filter F and the inside surface of the outer cylinder 15 including the burst plate. As a result of this, the gas passing through the filter F is equalized in pressure in the space G and then is released from the gas releasing holes 15a formed in the outside surface of the outer cylinder 15 into the airbag. Thus, the gases released through the respective gas releasing holes 15a are equalized in quantity and also the pressures between internal and external of the filter F are equalized, with the result that the gas can pass through the filter F substantially uniformly to thereby produce improved efficiency of the filter.

The lid 16 of the housing 11 is provided with the ignition device 14 comprising inflammation agents 9 and an igniter 10 (electric detonator). The inflammation agents 9 of the ignition device 14 are set apart from a protrusion 16b of the lid 16 fitted in the filter F with a narrow space, to be partitioned from the gas generating agents 12 by a flanged cap member 21 to be fitted to the lid 16.

Next, operation of the gas generator X will be described. When a collision sensor (not shown) detects collision of a vehicle, the igniter 10 of the ignition device 114 is ignited under the collision detection signals to ignite the inflammation agents 9. Then, flames spurt toward the gas generating agents 12 from a through hole 21a of the cap member 21 to ignite the gas generating agents 12, to thereby generate high temperature and high pressure gas. The high pressure and high temperature gas generated in the housing flows into the filter F and passes through the filter F in radial and circumferential directions, flowing into the space G appearing between the outside surface of the filter F and the inside surface of the housing 11. When the pressure in the housing 11 reaches a predetermined pressure by the burning of the gas generating agents 12, the burst plate 17 formed of aluminum foil and closing the gas releasing holes 15a is burst, so that the clean gas equalized in the space G is released into the airbag from the gas releasing holes 15a to inflate and expand the airbag rapidly. It is noted that the gas collides with expanded metal repeatedly in the process of flowing through the filter F, in the process of which the slag components contained from the gas are gradually scavenged in the manner mentioned above and, then, the resultant gas is cooled and is released from the gas releasing holes 15a into the airbag.

Thus, according to the gas generator X of the illustrated embodiment, since the laminate of the expanded metal 2 is used as the filter F, the filter F is a uniform body having little variation in density, as compared with the general type of filter formed by laminated woven metal screens or metal fibers as consolidated, thus achieving a uniform stream of gas and providing improved gas cooling efficiency and improved slag scavenging efficiency. Also, the area of the each aperture 1b forming the gas passage can be enlarged, as compared with the general type of filter, and also the spaces are formed between the respective expanded metals as well, so that the resistance to the gas passing through the filter is reduced. Thus, the filter having low pressure loss and little variation in pressure loss is provided, as compared with the general type of filter. As a result of this, an influence exerted on the control of properties of the gas generator becomes low and the effect of facilitating the design of the gas generator can be expected.

Referring now to FIG. 10, there is shown a sectional view of one example of a gas generator Y for a driver use using the filter of the present invention. An upper container 31 comprising an inner cylinder 31a and an outer cylinder 31b and a lower container 32 having inner and outer cylinders whose end portions 32a, 32b confront the end portions of the inner and outer cylinders are connected together by friction welding to form a housing 30 for the gas generator. An ignition device 35 is disposed in an inner chamber of the housing 30, and the gas generating agents 12 and the filter F are disposed in an outer chamber of the housing. It is noted that the filter F and the gas generating agents 12 at the bottom are supported by a retainer ring 36, and a sealant doubling as cushion material 37, formed of heat-resisting material such as ceramic fibers or graphite, is disposed on an upper surface of the filter F. 38 designates gas releasing holes formed in the housing 30. The sealant doubling as the cushion material 37 can be omitted in terms of prevention of the gas flowing out from an end face of the filter F, as aforementioned.

In this example, the filter F is a cylinder in which the expanded metal is laminated. The space G is defined between the outside surface of the filter and the inside surface of the housing by the turning backward portion inherently formed at the apertures in the expanded metal. As a result of this, when the gas generated by the burning of the gas generating agents 12 passes through the filter F, the pressures between internal and external of the filter F are equalized, with the result that the gas can pass through the filter F uniformly, as aforementioned. Further, the slag contained is scavenged from the gas by the Inertia scavenging method in the process of flowing through the filter F, as aforementioned, and the resultant gas is cooled and is released from the gas releasing holes 38 into the airbag.

As described above, according to the filter of the present invention, since the expanded metal is laminated to form the filter and narrow spaces are defined between the layers by the turning backward portions formed at the apertures of the expanded metal, when passing through the relatively large apertures in the expanded metal, the gas collides with the metallic surface on the outer side and thereby the slag in the gas is scavenged by the so-called Inertia scavenging method. Besides, since this phenomenon occurs at a large number of uniform apertures, the scavenging of the slag can be done with high efficiency.

Also, the existence of the narrow spaces defined between the layers of the expanded metal can permit equalization of the gas, every time the gas passes through the layers, to surely prevent the biased flow of the gas in the filter, so as to improve filtering efficiency, thus achieving an intended performance with a small filter.

In addition, as a result of the narrow spaces being formed between the filter and the inside surface of the housing of the gas generator by the turning backward portions formed at the apertures of the expanded metal, the pressures between internal and external layers of the filter are also equalized, respectively. As a result of this, the filtering efficiency is further improved and the gas can be released substantially uniformly from a large number of gas releasing holes formed in the housing to give little thermal damage to the airbag and facilitate the uniform inflation of the airbag.

Also, according to the present invention, the apertures in the expanded metal used can provide large gas passages, as compared with the narrow gas passages formed in the general type of consolidated laminate of woven metal screen or metallic fibers, and, besides, narrow spaces are formed between the respective layers of the laminated expanded metal as well, so that the resistance to the gas passing through the filter is reduced, as compared with the general type of filter. As a result of this, stability is given to the flow of gas in the gas generator and, at the same time, little variation in generation of the gas is provided in the gas generator, to produce stability in gas generation and thus facilitate the inflation of the airbag according to the intended design.

Further, since the expanded metal itself is a metal material of good thermal conductivity, the gas can be well heat-exchanged in the process of passing through the filter. When stainless steel is used as the metal material, corrosion resistance can also be afforded. When common steel is used as the metal material, a surface treatment, such as a nickel plating or a copper plating, is given to it to provide corrosion resistance so that it can be used for the expanded metal.

Further, when the wide expanded metal is laminated to form an elongate cylindrical laminate, no restrictions are put on length originating from compression variations, differently from the conventional one. Thus, the cylindrical filter having a desired length can be manufactured. Also, through a simple step that the elongate cylinder, after formed, is cut to a desired length and then the end face is finished by machining, the filter having a good end-face seal can be manufactured with efficiency and also the filter of uniform in quality as well can be mass-manufactured to enable further cost reduction.

### Capabilities of Exploitation in Industry

The filter of the present invention is the most suitable as a low-priced filter, simple in structure, easy for manufacturing of an elongate filter, in particular, and high strength, because slag scavenging function is afforded in a metal member having heat resistance, pressure resistance and large heat capacity. Further, the gas generator of the present invention using the filter of the present invention is the most suitable as the low-priced gas generator.

## Claims

1. A filter used for a gas generator for an airbag, which is formed by an expanded metal (2) having a large number of apertures (1b) is laminated cylindrically in layers.

2. A filter for a gas generator according to Claim 1, wherein the expanded metal (2) is laminated by being wound spirally, and at least an end portion (2b) of the outermost layer is fixed to the inner layer by welding.

3. A filter for a gas generator according to Claim 1, wherein the expanded metal (2) is laminated by being wound spirally in such a manner that a beginning portion (2a) of the expanded metal and an end portion (2b) of the same are placed in positions to be overlapped with each other and the beginning portion and the end portion are pressurized and welded by electric resistance welding to substantially flatten the inside and outside surfaces of the laminate.

4. A filter for a gas generator according to Claim 1, wherein apertures in an outer layer of the expanded metal (2) laminated in layers are larger in opening than apertures in an inner layer of the same.

5. A filter for a gas generator according to Claim 4, wherein apertures in the expanded metal (2) laminated in layers are made to become larger in opening successively from the inner layer side to the outer layer side.

6. A filter for a gas generator according to Claim 1, wherein at least one additional layer of the expanded metal or woven steel screen (4) having apertures coarser in opening than apertures of the expanded metal (2) formed into a filter body is interposed between intermediate layers of the cylindrical body of the expanded metal (2) laminated in layers.

7. A filter for a gas generator according to Claim 1, which is formed by an elongate cylindrical body formed by laminating the expanded metal (2) being cut to a desired length.

8. A filter for a gas generator according to Claim 7, wherein an end face of the cylindrical body formed by being cut to a desired length is finished by machining.

9. A filter for a gas generator according to Claim 1, wherein the expanded metal (2) is formed of a sheet steel and is plated with a corrosion resisting metal.

10. A filter for a gas generator according to Claim 1, wherein the expanded metal (2) is formed of a sheet stainless steel.

11. A gas generator (Y) wherein an ignition device (35) is disposed in a center part of a housing (30) having a large number of gas releasing holes (38); gas generating agents (12) are located at the outside of the ignition device; and a filter (F) is disposed at the outside of them, said filter (F) being the filter for the cylindrical gas generator according to any one of Claims 1 to 10.

12. A gas generator (X) wherein gas generating agents (12) are loaded in a center part of a housing (11) formed by an elongate cylindrical body having a large number of gas releasing holes (15a); a filter (F) is disposed around them; and an ignition device (14) is disposed in the housing (11) at one end portion thereof, said filter (F) being the filter for the cylindrical gas generator according to any one of Claims 1 to 10.
